(19) Europäisches Patentamt
European Patent Office
Office européen des brevets

(11) Veröffentlichungsnummer: **0 307 778 B1**

(12) # EUROPÄISCHE PATENTSCHRIFT

(45) Veröffentlichungstag der Patentschrift: **21.10.92**

(51) Int. Cl.$^5$: **D21H 17/43**, C08F 8/00

(21) Anmeldenummer: **88114594.0**

(22) Anmeldetag: **07.09.88**

(54) **Oberflächenleimungsmittel für Papier und papierähnliche Materialien.**

(30) Priorität: **18.09.87 DE 3731434**

(43) Veröffentlichungstag der Anmeldung:
**22.03.89 Patentblatt 89/12**

(45) Bekanntmachung des Hinweises auf die Patenterteilung:
**21.10.92 Patentblatt 92/43**

(84) Benannte Vertragsstaaten:
**CH DE FR GB LI**

(56) Entgegenhaltungen:
**EP-A- 0 171 727**

(73) Patentinhaber: **BAYER AG**
**W-5090 Leverkusen 1 Bayerwerk(DE)**

(72) Erfinder: **Sackmann, Günter, Dr.**
**Friedenberger Strasse 11**
**W-5090 Leverkusen 3(DE)**
Erfinder: **König, Joachim, Dr.**
**Am dem Broich 25**
**W-5068 Odenthal(DE)**
Erfinder: **Bäumgen, Heinz**
**Sperlingsweg 2**
**W-5090 Leverkusen 1(DE)**

EP 0 307 778 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Oberflächenleimungsmittel für Papier und papierähnliche Materialien, wie Karton oder Pappe.

Es gibt bereits eine Reihe von anionischen Oberflächenleimungsmitteln auf Basis alternierend aufgebauter Copolymerisate aus Maleinsäureanhydrid und Diisobutylen, wie sie in der DE-A-2 361 544, der DE-A-2 501 123 und der DE-A-2 701 760 beschrieben sind. Des weiteren gibt es auch Produkte auf der gleichen Copolymerisatbasis, die durch Umsetzung des Grundcopolymeren mit Monoaminen (EP-A-0009185) oder partielle Bisveresterung mit aliphatischen Monoalkoholen (DE-A-3 429 961, EP-A-0 171 727) dargestellt werden. Alle diese Produkte weisen zwar auf bestimmten Papiersorten, wie z.B. alaunhaltigen oder vorgeleimten, die Clay als Füllstoff enthalten, eine gute bis sehr gute Leimungswirkung auf. Von Nachteil ist jedoch, daß sie auf alaunfreien Papieren, vor allem auf solchen Papieren, die Kreide als Füllstoff enthalten, nur eine geringe oder oft gar keine Leimung zeigen. Da in jüngster Zeit der Trend bei der Papierherstellung in Richtung Neutralleimung und Einsatz von Kreide als Füllstoff zu beobachten ist, ist es heute für ein Papierleimungsmittel nachteilig, wenn es nur auf alaunhaltigem Papier eingesetzt werden kann.

Es wäre deshalb von großem technischen und wirtschaftlichen Interesse ein Oberflächenleimungsmittel zu haben, das alle Herstellungsbedingungen abdeckt, unter denen heute Papier produziert wird.

Wünschenswert wäre also ein Leimungsmittel, das sowohl in sauren pH-Bereich bei alaunhaltigen Papieren als auch im neutralen bis schwach alkalischen pH-Bereich bei alaunfreien und kreidehaltigen Papieren eingesetzt werden kann. Auf diese Weise könnte man bei Umstellung der Produktion dasselbe Leimungsmittel einsetzt und müßte nicht, wie bisher zumeist üblich, beim Übergang von der sauren auf die neutrale bis alkalische Fahrweise von einem anionischen zu einem kationischen Oberflächenleimungsmittel wechseln.

Aufgabe der vorliegenden Erfindung ist es, Leimungsmittel für Papier bereitszustellen, die ein wesentlich breiteres Anwendungsspektrum haben als die bisher verwendeten Produkte und die sowohl im sauren pH-Bereich bei alaunhaltigen Papieren als auch im neutralen bis schwach alkalischen pH-Bereich bei alaunfreien und kreidehaltigen Papieren eingesetzt werden können.

Überraschenderweise wurde nun gefunden, daß die im folgenden beschriebenen erfindungsgemäßen Oberflächenleimungsmittel ein sehr breites Anwendungsspektrum aufweisen, da sie auf Papiersorten unterschiedlichster Zusammensetzung eine ausgezeichnete Leimungswirkung ergeben.

Die Erfindung betrifft Oberflächenleimungsmittel für Papier und papierähnliche Materialien, wie Karton oder Pappe, enthaltend wäßrige oder wäßrig-alkoholische Alkali-, Amin- oder Ammoniumsalzlösungen von Copolymerisaten aus Maleinsäureanhydrid und Diisobutylen und gegebenenfalls einem Vinylmonomeren der Formel

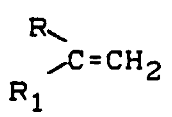 (I)

in der

R H, $-CH_3$, $-C_2H_5$, $-OR_2$, $-OCOCH_3$, 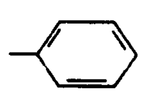, 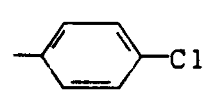, 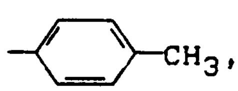, $-CH_2OH$, $-CH_2OCOCH_3$,

$R_1$ H, $-CH_3$ und

$R_2$ alkyl, vorzugsweise $C_1$-$C_6$-Alkyl, bezeichnen,

wobei die Anhydridgruppen der Copolymerisate zu 1 bis 60, vorzugsweise 3 bis 40, besonders bevorzugt 5 bis 30, Mol-%, bezogen auf die Anhydridgruppen, mit einem Gemisch aus $C_1$-$C_{12}$-aliphatischen Monoalkoholen und Aminoalkoholen der Formel

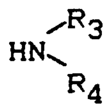 (II)

in der

$R_3$ H, $C_1$-$C_6$-Alkyl, z.B. $-CH_3$, $-C_2H_5$, Hydroxy-$C_1$-$C_6$-alkyl, vorzugsweise $-C_2H_4OH$ und

$R_4$ Hydroxy-$C_1$-$C_6$-alkyl, vorzugsweise $C_2H_4OH$ und $-C_3H_6OH$, bezeichnen,

umgesetzt sind.

Vorzugsweise enthalten die Copolymerisate nebeneinander die folgenden Struktureinheiten:

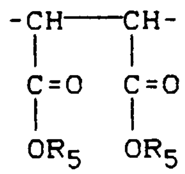 (III)

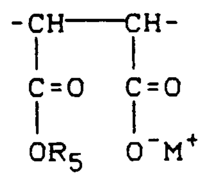 (IV)

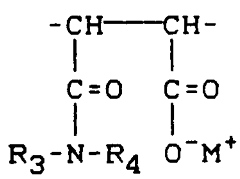 (V)

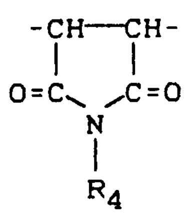 (VI)

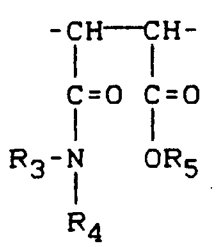 (VII)

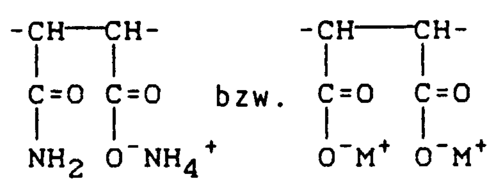 bzw. (VIII)

Die Struktureinheit (VI) tritt nur dann auf, wenn $R_3$ = H ist.

In den Formeln (II) bis (VIII) bezeichnen:

$R_5$ einen aliphatischen Rest mit 1 bis 12 C-Atomen und
$M^+$ $NH_4^+$, ein Alkalimetall- oder Ammoniumion.
$M^+$ steht bevorzugt für $NH_4^+$.

Weiterhin bevorzugt beträgt das molare Verhältnis von (III):(IV):(V):(VI):(VII):(VIII) = 1:2-10:0,01-0,02:0-0,02:0,01-0,015:2-10, besonders bevorzugt 1:2-5:0,01-0,015:0-0,015:0,01-0,012:4-6.

Die neuen Leimungsmittel zeichnen sich dadurch aus, daß sie im Vergleich zu den bisher bekannten Produkten, die die Struktureinheiten (III), (IV) und (VIII) enthalten, ein wesentlich breiteres Anwendungsspektrum besitzen. So zeigen sie nicht nur auf alaunhaltigen und vorgeleimten Papieren eine ausgezeichnete Leimungswirkung, sondern auch auf alaunfreien sowie kreidehaltigen Papieren. Zur Erzielung einer guten Leimungswirkung auf den beiden letztgenannten Papieren war bisher immer der Einsatz eines Oberflächenleimungsmittels mit kationischem Charakter notwendig.

Geeignete Vinylmonomere der Formel (I) zur Herstellung der Terpolymerisate sind beispielsweise Isobutylen, Styrol, $\alpha$-Methylstyrol, Allylalkohol und Isobutylvinylether.

Die Herstellung der dem neuen Leimungsmittel zugrunde liegenden Copolymerisate ist aus der Literatur bekannt oder kann in Analogie zu literaturbekannten Verfahren erfolgen.

Vorzugsweise verwendet man auf radikalischem Wege hergestellte Copolymerisate aus 0,8 bis 1,1 Mol Maleinsäureanhydrid und 0,8 bis 1,1 Mol Diisobutylen bzw. Diisobutylen/Vinylmonomer der Formel (I), wobei die Molangaben für Diisobutylen sich auf den Gehalt an 2,4,4-Trimethylpenten-(1) beziehen.

Zur Auslösung der Copolymerisation können radikalbildende Substanzen, wie z.B. Peroxide, Hydroperoxide, Perester, Azoverbindungen, sowie Redoxkatalysatorsysteme eingesetzt werden.

Die Polymerisation kann drucklos in Substanz oder bevorzugt in Lösung durchgeführt werden. Erfolgt sie in Lösung, so sind solche Lösungsmittel bevorzugt, in denen sich sowohl die Monomeren, als auch die Copolymeren lösen, z.B. Aromaten wie Benzol, Toluol, halogenierte Aromaten wie Chlorbenzol, Chlortoluol, niedere Ketone wie Aceton, Ethylmethylketon, Ester niederer Fettsäuren wie Essigsäureethylester, chlorierte aliphatische Kohlenwasserstoffe wie Chloroform, Tetrachlorkohlenstoff, Ether wie Tetrahydrofuran, stark polare Lösungsmittel wie Dimethylformamid oder Dimethylsulfoxid. Die Polymerisationstemperatur liegt zwischen 20 und 150 ° C, vorzugsweise aber zwischen 30 und 120 ° C.

Als Beispiele für die einzusetzenden Monoalkohole, die linear, verzweigt oder cyclisch sein können, seien genannt:
Methanol, Ethanol, n-Propanol, Isopropanol, n-Butanol, Isobutanol, sec.-Butanol, n-Pentanol, Isoamylalkohol, n-Hexanol, n-Octanol, n-Dodecanol, Cyclohexanol und 2-Ethylhexanol; n-Butanol wird bevorzugt eingesetzt. Es können aber auch Gemische dieser Alkohole eingesetzt werden.

Als Beispiele für die einzusetzenden Aminoalkohole der Formel (II) seien genannt:
2-Aminoethanol, 2-Methylaminoethanol, 3-Amino-1-propanol, 1-Amino-2-propanol, 4-Amino-2-butanol, 2-Amino-2-methylpropanol oder Diethanolamin.

Die Umsetzung der Copolymerisate aus Maleinsäureanhydrid und Diisobutylen oder der Terpolymerisate aus Maleinsäureanhydrid, Diisobutylen und einem Vinylmonomeren der Formel (I) mit dem Gemisch aus aliphatischem Monoalkohol und dem Aminoalkohol der Formel (II) erfolgt vorzugsweise in Lösung oder Suspension in Gegenwart eines Schleppmittels für das sich abspaltende Reaktionswasser wie z.B. Benzol, Toluol oder Xylol, bei der Siedetemperatur des jeweiligen Schleppmittels. Setzt man niedrig-siedende Alkohole zur Veresterung ein, dann wird die Reaktion unter Druck durchgeführt. Der Temperaturbereich bei dem die Umsetzung mit dem Alkohol/Aminoalkohol-Gemisch vorgenommen wird, liegt im allgemeinen zwischen 80 und 170 ° C. Zur Beschleunigung der Reaktion können dem Reaktionsgemisch saure Katalysatoren, wie z.B. Schwefelsäure, p-Toluolsulfonsäure oder Perfluoroctansulfonsäure oder Perfluorbutansulfonsäure oder Methansulfonsäure, in Mengen zwischen 0,2 und 5 Gew.-%, bezogen auf das eingesetzte Polymerisat, zugesetzt werden.

Bevorzugt ist dabei p-Toluolsulfonsäure in einer Menge zwischen 0,5 und 2 Gew.-%, bezogen auf das umzusetzende Copolymerisat. Das Molverhältnis der Monoalkohole zu den Aminoalkoholen liegt vorzugsweise zwischen 1:0,03 und 1:0,30, besonders bevorzugt zwischen 1:0,06 und 1:0,18. Das Molverhältnis der Copolymerisate zu der Summe aus den Monoalkoholen und Aminoalkoholen liegt bevorzugt zwischen etwa 1:0,60 und etwa 1:0,01. Bei der Druchführung der Veresterungsreaktion kann so vorgegangen werden, daß man entweder das Gemisch aus Monoalkohol und Aminoalkohol einsetzt oder aber zunächst mit dem Alkohol und daran anschließend mit dem Aminoalkohol die Reaktion durchführt. Die Reaktionszeit liegt vorzugsweise zwischen 4 und 24 Stunden, besonders bevorzugt sind 4 bis 8 Stunden. In der Regel wird die Veresterungsreaktion dann als beendet betrachtet, wenn kein Reaktionswasser mehr abgespalten wird. Da die Umsetzung der Maleinsäureanhydridmonomereinheiten mit dem Gemisch aus Monoalkohol und Aminoalkohol nie quantitativ durchgeführt wird, und somit immer Carboxylgruppen sowie in geringem Umfange auch cyclische Anhydridgruppen übrig bleiben, können die veresterten Co- und Terpolymerisate durch

Neutralisation mit wäßrigen Alkali-, Ammoniak-oder Aminlösungen in wasserlösliche Salze überführt werden.

Die Salzbildung kann z.B. durch die Hydroxide der Alkalimetalle wie Natrium- und Kaliumhydroxid, Ammoniak oder durch primäre, sekundäre oder tertiäre Amine wie Methylamin, Dimethylamin, Ethanolamin, Triethylamin, Diethanolamin oder Triethanolamin, erfolgen.

Da - wie aus den IR-Spektren ersichtlich - neben den Halbester-, Bisester-, Halbamid-, Imid- sowie gemischten Halbester/Halbamidgruppierungen immer auch noch nicht umgesetzte Anhydrideinheiten in den Co- und Terpolymerisaten vorhanden sind, führt die Umsetzung mit den wäßrigen Alkali-, Ammoniak- oder Aminlösungen auch zur Bildung von Halbamid/Halbammoniumsalzen (VIII) die ebenfalls wasserlöslich sind.

Die wäßrigen oder wäßrig-alkoholischen Lösungen eignen sich vorzüglich als anionische wenig schäumende Papierleimungsmittel im sauren und neutralen Bereich bei der Herstellung von alaunhaltigen, alaunfreien, vorgeleimten und holzhaltigen Papieren, die unterschiedliche Füllstoffe, wie Kaolin, Kreide und $TiO_2$ enthalten können.

In der Praxis wird zur Herstellung der Maleinsäureanhydrid-Diisobutylen-Copolymerisate ein technisches Gemisch aus 2,4,4-Trimethylpenten-(1) und 2,4,4-Trimethylpenten-(2) eingesetzt, wobei vornehmlich die Penten-(1)-Verbindung zu hochmolekularen Copolymerisaten reagiert.

In einer bevorzugten Ausführung der Erfindung werden die Leimungsmittel als wäßrige Lösungen in Mischung mit Harnstoff und Harnstoffderivaten eingesetzt. Durch diese Abmischung ergibt sich ein zusätzlicher leimungsverstärkender Effekt sowie eine starke Verminderung der Lösungsviskosität der erfindungsgemäßen Leimungsmittel. Vorzugsweise eingesetzte Harnstoffderivate sind solche, bei denen eines oder beide Stickstoffatome mit $C_1$-$C_4$-Alkylgruppen oder $C_1$-$C_4$-Hydroxyalkylgruppen, wie z.B. Hydroxymethylgruppen, substituiert sind. Als Beispiele für derartige Derivate seien Dimethylharnstoff, Tetramethylharnstoff und Dimethylolharnstoff genannt. Die Menge an zugesetzten Harnstoff bzw. an zugesetzten Harnstoffderivaten beträgt dabei im allgemeinen 10 bis 200 Gew.-%, vorzugsweise 20 bis 100 Gew.-%, bezogen auf das Gewicht der Alkali-, Ammonium- und Aminsalze bzw. auf die Halbamid/Halbammoniumsalze der partiell mit Monoalkohol/Aminoalkohol-Gemischen umgesetzten Co- bzw. Terpolymerisate auf Basis von Maleinsäureanhydrid und Diisobutylen.

Die erfindungsgemäßen Oberflächenleimungsmittel für Papier sind nach allen bei der Papierherstellung für die Oberflächenleimung gebräuchlichen Verarbeitungsmethoden einsetzbar. Die Leimungsmittel können sowohl alleine als auch in Kombination mit Kunststoffdispersionen zur Anwendung kommen. Sie sind gegenüber schaumfördernden Einflüssen, wie z.B. ungünstigen apparativen Voraussetzungen und hohen Härtegraden des bei der Papierherstellung verwendeten Wassers, unempfindlich, so daß die Papieroberflächenleimungsmittel praktisch überall ohne eine den Produktionsvorgang störende Schaumbildung sowie ohne einen Zusatz von Entschäumern eingesetzt werden können. Die erfindungsgemäßen Produkte eignen sich entweder alleine oder in Kombination mit Leimungsmitteln, die zur Papiermasse zugegeben werden, für die Oberflächenleimung der meisten gängigen Papierqualitäten, wie z.B. alaunhaltige, alaunfreie, mit Koalin gefüllte, mit Kreide gefüllte, mit $TiO_2$ gefüllte, neutrale, saure, ungeleimte, vorgeleimte, holzhaltige und Altpapier enthaltende Papiere.

Die Prozentangaben in den folgenden Beispielen beziehen sich stets auf das Gewicht.

## Beispiele

Herstellung des Papieroberflächenleimungsmittels A:

In einem 2-l-Rührgefäß, das mit Rückflußkühler und Stickstoffeinleitungsrohr ausgerüstet ist, wird unter Rühren eine Lösung von 294 g Maleinsäureanhydrid in 375 g Toluol vorgelegt und auf 100 °C erhitzt. In diese Lösung dosiert man innerhalb von 3 Stunden aus zwei getrennten Vorratsgefäßen eine Lösung von 9,375 g Azoisobuttersäuredinitril in 300 g Toluol sowie 480 g Diisobutylen (technisches Gemisch aus ca. 75 Gew.-% 2,4,4-Trimethylpenten-1 und 25 Gew.-% 2,4,4-Trimethylpenten-2). Nach beendetem Zudosieren wird noch 4 Stunden bei 100 °C nachgerührt. Danach leitet man in die Copolymerlösung während 0,5 Stunden 22,5 g Isobutylen ein und tropft gleichzeitig eine Lösung von 2,81 g t-Butyl-per-2-ethylhexanoat in 22,5 g Toluol zu. Nach zweistündigem Rühren bei 100 °C wird nicht einpolymerisiertes Diisobutylen abdestilliert, und daran anschließend wird eine Lösung mit folgender Zusammensetzung zugegeben:
222 g n-Butanol, 34,2 g 2-Aminoethanol, 51 g Toluol und 3,0 g Methansulfonsäure. Dieses Reaktionsgemisch wird 6 Stunden unter Wasserabspaltung am Rückfluß erhitzt. Danach wird auf etwa 40 °C abgekühlt und die gesamte Polymerlösung in ein unter Vakuum stehendes und mit 4 l 60 °C warmem Wasser gefülltes Gefäß eingesaugt. Bei diesem Strippvorgang wird das organische Lösungsmittel azeotrop abdestilliert, und es bleibt eine wäßrige Suspension des polymeranalog umgesetzten Copolymerisats zurück. Durch Zugabe von wäßriger Ammoniaklösung wird das Copolymerisat in die wäßrige Lösung seines

Halbamid/Halbammoniumsalzes überführt. Nachdem diese wäßrige Lösung zur Entfernung restlicher Monomerer und Lösungsmittel einem Entgasungsvorgang unterworfen worden ist, wird sie direkt als solche zur Oberflächenleimung von Papier eingesetzt.

Leimungsmittel B:

Die Herstellung des Papieroberflächenleimungsmittels B erfolgt in ähnlicher Weise wie die von A mit dem Unterschied, daß bei der Veresterung anstelle eines Gemisches aus n-Butanol und 2-Aminoethanol eine Mischung aus n-Butanol und Diethanolamin eingesetzt wurde.

Leimungsmittel C:

Zur Herstellung des Leimungsmittels C wurde zur Durchführung der Veresterung ein Gemisch aus n-Butanol und 2-Methylaminoethanol eingesetzt.

Leimungsmittel D:

Das Leimungsmittel D wurde durch Umsetzung des Copolymerisats aus Beispiel A mit einem Gemisch aus n-Butanol und 3-Amino-1-propanol erhalten.

Leimungsmittel E:

Zur Herstellung des Leimungsmittels E wurde wie im Beispiel A verfahren, wobei jedoch das Copolymerisat mit einem Gemisch aus n-Butanol und 1-Amino-2-propanol umgesetzt wurde.

Leimungsmittel F:

Das Leimungsmittel F erhielt man, indem das in Beispiel A beschriebene Copolymerisat mit einer Mischung aus n-Butanol und 2-Amino-2-methylpropanol zur Reaktion gebracht wurde.

Anwendungsbeispiele

Die Leimungswirkung der erfindungsgemäßen Leimungsmittel wurde auf fünf verschiedenen Papiersorten geprüft, welche folgende Zusammensetzung hatten:

a) Alaunfreies Papier:
50 % Nadelholzzellstoff, 50 % Laubholzzellstoff, 9,5 % Clay-Asche, pH-Wert im Stoffauflauf: 7,2; Naßaufnahme in einer Laborleimpresse: ca. 85 %; Papiergewicht: 80 g/m$^2$.
b) Alaunhaltiges Papier:
50 % Nadelholzzellstoff, 50 % Laubholzzellstoff, 1% Alaun, 11,2 % Clay-Asche, pH-Wert im Stoffauflauf: 5,0; Naßaufnahme: ca. 80 %; Papiergewicht: 80 g/m$^2$.
c) Vorgeleimtes Papier:
50 % Nadelholzzellstoff, 50 % Laubholzzellstoff, 1 % Alaun, 11,1 % Clay-Asche, 0,1 % Harzleim, pH-Wert im Stoffauflauf: 4,5; Naßaufnahme: ca. 70%; Papiergewicht: 80 g/m$^2$.
d) Kreidehaltiges Papier:
50 % gebleichtes Birkensulfat, 50 % gebleichtes Kiefernsulfat, 15 % Kreide, Mahlgrad: 35° SR, Naßaufnahme: 80 %;, pH-Wert im Stoffauflauf: 7,5 ; Papiergewicht: 75 g/m$^2$.
b) Holzhaltiges Papier:
40 % Nadelholzzellstoff, 60 % Holzschliff, 1 % Alaun, 14,1 % Clay-Asche, pH-Wert im Stoffauflauf: 4,5; Naßaufnahme: ca. 50 %; Papiergewicht: 75 g/m$^2$.

Die Leimung der Papiere erfolgte auf einer Laborleimpresse der Firma Mathis, Zürich, Schweiz, Type HF. Als Leimungsflotte wurde ein Lösung aus 5 Gew.-Teilen handelsüblicher Stärke und 0,32 und 0,40 Teilen des zu prüfenden Leimungsmittels verwendet, die mit Wasser bis auf 100 Teile ergänzt wurde. Die Trocknung der oberflächengeleimten Papiere erfolgte auf einem Trockenzylinder innerhalb einer Minute bei ca. 100° C. Vor der Leimungsprüfung wurden die Papiere 2 Stunden bei Raumtemperatur klimatisiert.

Zur Beurteilung des Leimungsgrades der oberflächengeleimten Papiere wurden die Cobb-Werte (nach DIN 53 132) bestimmt sowie Tintenschwimmproben (TSP) durchgefürt. Für die Tintenschwimmproben wurden die Papiere in Streifen von 3 cm Breite und 3 cm Länge geschnitten und auf blaue Prüftinte gelegt. Nach für die einzelnen Papiersorten unterschiedlichen Prüfzeiten wurden die Probenpapiere von der Tinte

genommen, rückseitig auf Löschpapier abgequetscht und nach 5 Minuten visuell beurteilt. Zur qualitativen Bestimmung der Tintendurchdringung durch das Papier und somit des Leimungsgrades wurde eine Bewertung mit den Zahlen 1 bis 5 durchgeführt, wobei die Zahlen im einzelnen bedeuten:

1 kein Tintendurchschlag
2 5 bis 10 % Tintendurchschlag
3 10 bis 20 % Tintendurchschlag
4 ca. 50 % Tintendurchschlag
4,5*) ca. 90 % Tintendurchschlag
5 100 % Tintendurchschlag

*) Außerdem können noch weitere Zwischenwerte herangezogen werden.

Die folgenden Tabellen zeigen die Wirksamkeit der erfindungsgemäßen Papieroberflächenleimungsmittel A-F auf verschiedenen Papiersorten.

Tabelle 1

| Papiersorte: Alaun-frei | | | | |
|---|---|---|---|---|
| Leimungsmittel | Cobb-Wert in g/m² bei Leimungsmittelzusatz von | | TSP (3 min) bei Zusatz von | |
| | 0,32 % | 0,40 % | 0,32 % | 0,40 % |
| A | 24,7 | 24,2 | 2 | 2 |
| B | 36,0 | 25,3 | 2 | 2 |
| C | 38,0 | 35,0 | 4 | 3,5 |
| D | 34,0 | 32,0 | 4 | 3,5 |
| E | 35,0 | 33,0 | 3,5 | 3 |
| F | 33,0 | 32,0 | 2,5 | 2,5 |

Auch auf alaunhaltigem Papier zeigen die erfindungsgemäßen Leimungsmittel A bis F ausgezeichnete Leimungswirkung.

Tabelle 2

| Papiersorte: Kreidehaltig | | | | |
|---|---|---|---|---|
| Leimungsmittel | Cobb-Wert in g/m² bei Leimungsmittelzusatz von | | TSP (15 min) bei Zusatz von | |
| | 0,32 % | 0,40 % | 0,32 % | 0,40 % |
| A | 27,3 | 27,0 | 2 | 2 |
| B | 28,8 | 28,7 | 1,5 | 1,5 |
| C | 28,8 | 27,1 | 2,5 | 2,5 |
| D | 26,7 | 26,3 | 2 | 2 |
| E | 30,0 | 29,8 | 2 | 2 |
| F | 29,1 | 28,6 | 1,5 | 1,5 |

Auch auf vorgeleimtem oder holzhaltigem Papier zeigen die erfindungsgemäßen Leimungsmittel ausgezeichnete Leimungswirkung.

Aus den oben dargestellten Befunden geht sehr deutlich hervor, daß die erfindungsgemäßen Produkte auf verschiedenen Papiersorten eine ausgezeichnete Leimungswirkung zeigen.

Die beiden folgenden Tabellen zeigen am Beispiel von alaunfreiem (TSP: 3 min) und kreidehaltigem (TSP: 15 min) Papier, daß die erfindungsgemäßen Leimungsmittel auch dann ihre guten Leimungseigenschaften beibehalten -ebenfalls nachgewiesen durch die Cobb-Werte und die Tintenschwimmproben - wenn ihre wäßrigen Lösungen zusätzlich noch 50 Gew.-% Harnstoff, bezogen auf den Gehalt an polymeren Wirksubstanz, enthalten. Die Leimungsmittel G und H - wie das Leimungsmittel A - wurden dabei jeweils durch die Umsetzung eines alternierenden Maleinsäureanhydrid/Diisobutylen-Copolymerisats mit einem Gemisch aus n-Butanol und 2-Aminoethanol und anschließende Überführung der so modifizierten Copolymerisate in ihre Halbamid/Halbammoniumsalze erhalten.

Beim Leimungsmittel G betrug das Molverhältnis von n-Butanol zu 2-Aminoethanol 1:0,18 während

beim Leimungsmittel H das entsprechende Molverhältnis 1: 0,12 bei der Umsetzung der Maleinsäureanhydridgruppen tragenden Copolymerisate betrug.

Tabelle 3

| Leimungsmittel G: | | | | |
|---|---|---|---|---|
| Papiersorte | Cobb-Wert in g/m² bei Leimungsmittelzusatz von | | TSP (3 min bzw. 15 min) bei Zusatz von | |
| | 0,32 % | 0,40 % | 0,32 % | 0,40 % |
| Alaunfrei<br>Kreidehaltig | 26,8<br>28,7 | 25,8<br>28,6 | 2,5<br>2,0 | 2,5<br>2,0 |

Tabelle 4

| Leimungsmittel H: | | | | |
|---|---|---|---|---|
| Papiersorte | Cobb-Wert in g/m² bei Leimungsmittelzusatz von | | TSP (3 min bzw. 15 min) bei Zusatz von | |
| | 0,32 % | 0,40 % | 0,32 % | 0,40 % |
| Alaunfrei<br>Kreidehaltig | 30,0<br>32,0 | 28,6<br>28,5 | 3,0<br>2,0 | 2,5<br>2,0 |

Der Harnstoffzusatz bewirkt bei erfindungsgemäßen Leimungsmitteln neben einer Reduzierung der Lösungsviskosität außerdem eine Verringerung der Schaumbildungstendenz, die u.U. in der Leimungsflotte auftreten kann.

**Patentansprüche**

**1.** Oberflächenleimungsmittel für Papier und papierähnliche Materialien, enthaltend wäßrige oder wäßrig-alkoholische Alkali-, Amin- oder Ammoniumsalzlösungen von Copolymerisaten aus Maleinsäureanhydrid und Diisobutylen und gegebenenfalls einem Vinylmonomeren der Formel

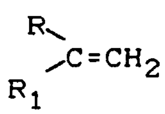 (I)

in der

R H, $-CH_3$, $-C_2H_5$, $-OR_2$, $-OCOCH_3$,

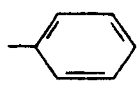, 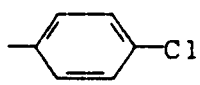, 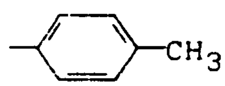,

$-CH_2OH$, $-CH_2OCOCH_3$,

$R_1$ H, $-CH_3$ und

$R_2$ Alkyl bezeichnen,

wobei die Anhydridgruppen der Copolymerisate zu 1 bis 60 Mol-%, bezogen auf die Anhydridgruppen, mit einem Gemisch aus $C_1$-$C_{12}$-aliphatischen Monoalkoholen und Aminoalkoholen der Formel

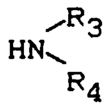

(II)

in der

$R_3$ H, $C_1$-$C_6$-Alkyl, Hydroxy-$C_1$-$C_6$-alkyl und

$R_4$ Hydroxy-$C_1$-$C_6$-alkyl bezeichnen,

umgesetzt sind.

2. Leimungsmittel gemäß Anspruch 1, dadurch gekennzeichnet, daß die Anhydridgruppen zu 3 bis 40 Mol-% umgesetzt sind.

3. Leimungsmittel gemäß Anspruch 1, dadurch gekennzeichnet, daß die Anhydridgruppen zu 5 bis 30 Mol-% umgesetzt sind.

4. Leimungsmittel gemäß den Ansprüchen 1 bis 3, dadurch gekennzeichnet, daß das Vinylmonomere Isobutylen, Styrol, α-Methylstyrol, Allylalkohol oder Isobutylvinylether ist.

5. Leimungsmittel gemäß den Ansprüchen 1 bis 4, dadurch gekennzeichnet, daß der Monoalkohol Methanol, Ethanol, n-Propanol, Isopropanol, Isobutanol, sec.-Butanol, n-Pentanol, Isoamylalkohol, n-Hexanol, n-Octanol, n-Dodecanol, Cyclohexanol, 2-Ethylhexanol und insbesondere n-Butanol oder ein Gemisch dieser Alkohole ist.

6. Leimungsmittel gemäß den Ansprüchen 1 bis 5, dadurch gekennzeichnet, daß der Aminoalkohol 2-Methylaminoethanol, 3-Amino-1-propanol, 1-Amino-2-propanol, 4-Amino-2-butanol, 2-Amino-2-methylpropanol, Diethanolamin und insbesondere 2-Aminoethanol oder ein Gemisch dieser Alkohole ist.

7. Leimungsmittel gemäß den Ansprüchen 1 bis 6, dadurch gekennzeichnet, daß sie nebeneinander die folgenden Struktureinheiten enthalten:

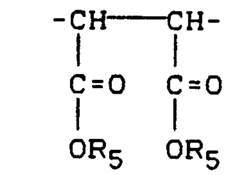

(III),

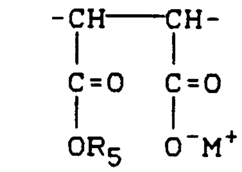

(IV)

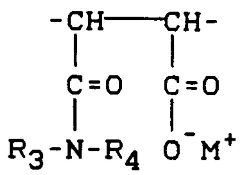

(V)

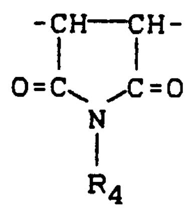

(VI)

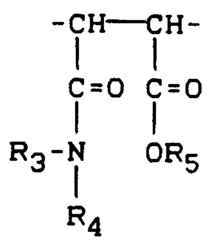

(VII)

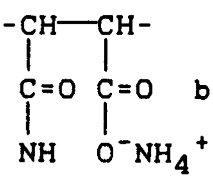

bzw.

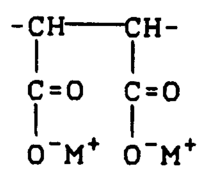

(VIII)

wobei

$R_5$ einen aliphatischen Rest mit 1 bis 12 C-Atomen,

$M^+$ $NH_4^+$, ein Alkalimetall- oder Ammoniumion bezeichnen und

wobei die Struktureinheit (VI) nur dann auftritt, wenn in Formel (II) $R_3$ = H ist.

**8.** Leimungsmittel gemäß Anspruch 7, dadurch gekennzeichnet, daß das molare Verhältnis von (III):(IV):-(V):(VI):(VII):(VIII) = 1:2-10:0,01-0,02:0-0,02:0,01-0,015:2-10 beträgt.

**9.** Leimungsmittel gemäß Anspruch 7, dadurch gekennzeichnet, daß das molare Verhältnis von (III):(IV):-(V):(VI):(VII):(VIII) = 1:2-5:0,01-0,015:0-0,015:0,01-0,012:4-6 beträgt.

**10.** Leimungsmittel gemäß den Ansprüchen 1 bis 8, dadurch gekennzeichnet, daß sie Harnstoff oder ein Harnstoffderivat enthalten.

## Claims

1. Surface-sizing agents for paper and paper-like materials, comprising aqueous or aqueous-alcoholic alkali metal, amine or ammonium salt solutions of copolymers of maleic anhydride and diisobutylene and if appropriate a vinyl monomer of the formula

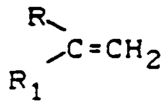

(I)

in which

R designates H, $-CH_3$, $-C_2H_5$, $-OR_2$, $-OCOCH_3$,

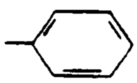 , 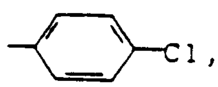 , 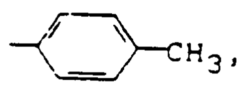

$-CH_2OH$ or $-CH_2OCOCH_3$,

$R_1$ designates H or $-CH_3$ and
$R_2$ designates alkyl,

the anhydride groups of the copolymers being reacted to the extent of 1 to 60 mol %, based on the anhydride groups, with a mixture of $C_1$-$C_{12}$-aliphatic monoalcohols and amino-alcohols of the formula

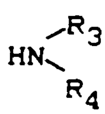

(II)

in which

$R_3$ designates H, $C_1$-$C_6$-alkyl or hydroxy-$C_1$-$C_6$-alkyl and
$R_4$ designates hydroxy-$C_1$-$C_6$-alkyl.

2. Sizing agents according to Claim 1, characterised in that the anhydride groups are reacted to the extent of 3 to 40 mol %.

3. Sizing agents according to Claim 1, characterised in that the ahydride groups are reacted to the extent of 5 to 30 mol %.

4. Sizing agents according to Claims 1 to 3, characterised in that the vinyl monomer is isobutylene, styrene, $\alpha$-methylstyrene, allyl alcohol or isobutyl vinyl ether.

5. Sizing agents according to Claims 1 to 4, characterised in that the monoalcohol is methanol, ethanol, n-propanol, isopropanol, isobutanol, sec-butanol, n-pentanol, isoamyl alcohol, n-hexanol, n-octanol, n-dodecanol, cyclohexanol, 2-ethylhexanol and, in particular, n-butanol, or a mixture of these alcohols.

6. Sizing agents according to Claims 1 to 5, characterised in that the amino-alcohol is 2-methylaminoethanol, 3-amino-1-propanol, 1-amino-2-propanol, 4-amino-2-butanol, 2-amino-2-methylpropanol, diethanolamine and, in particular, 2-aminoethanol, or a mixture of these alcohols.

7. Sizing agents according to Claims 1 to 6, characterised in that they comprise the following structural

units side by side:

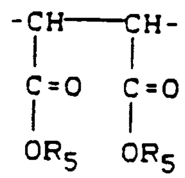

(III)

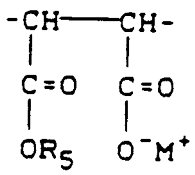

(IV)

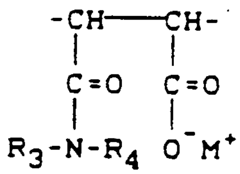

(V)

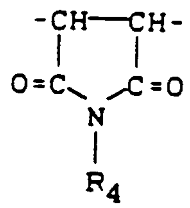

(VI)

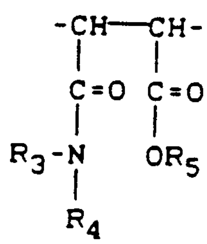

(VII)

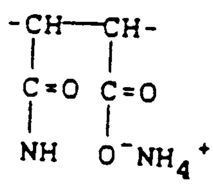

or

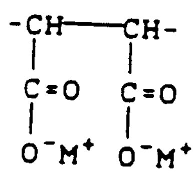

(VIII)

wherein

$R_5$ designates an aliphatic radical having 1 to 12 C atoms and

$M^+$ designates $NH_4^+$ or an alkali metal ion or ammonium ion and

wherein the structural unit (VI) only occurs if, in formula (II), $R_3$ is H.

**8.** Sizing agents according to Claim 7, characterised in that the molar ratio of (III):(IV):(V):(VI):(VII):(VIII) is 1:2-10:0.01-0.02:0-0.02:0.01-0.015:2-10.

**9.** Sizing agents according to Claim 7, characterised in that the molar ratio of (III):(IV):(V):(VI):(VII):(VIII) is 1:2-5:0.01-0.015:0-0.015:0.01-0.012:4-6.

**10.** Sizing agents according to Claims 1 to 8, characterised in that they contain urea or a urea derivative.

**Revendications**

**1.** Agents de collage superficiel pour papier et matériaux similaires, contenant des solutions aqueuses ou aqueuses-alcooliques de sels alcalins, d'amines ou d'ammonium de copolymérisats d'anhydride d'acide maléique et de diisobutylène et, le cas échéant, d'un monomère vinylique de formule

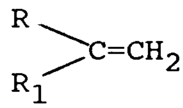 (I)

dans laquelle

R représente H, $-CH_3$, $-C_2H_5$, $-OR_2$, $-OCOCH_3$,

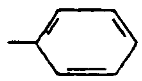 , 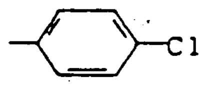 , 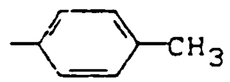 ,

$-CH_2OH$, $-CH_2OCOCH_3$,

$R_1$ représente H, $-CH_3$ et

$R_2$ est un groupe alkyle,

les groupes anhydride des copolymérisats étant combinés en proportion de 1 à 60 moles % par rapport aux groupes anhydride, avec un mélange de mono-alcools aliphatiques en $C_1$ à $C_{12}$ et d'amino-alcools de formule

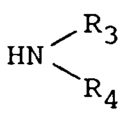 (II)

dans laquelle

$R_3$ représente H, un groupe alkyle en $C_1$ à $C_6$, hydroxy-alkyle en $C_1$ à $C_6$ et

$R_4$ est un groupe hydroxy-alkyle en $C_1$ à $C_6$.

**2.** Agents de collage suivant la revendication 1, caractérisés en ce que les groupes anhydride ont réagi dans la proportion de 3 à 40 moles %.

**3.** Agents de collage suivant la revendication 1, caractérisés en ce que les groupes anhydride ont réagi dans la proportion de 5 à 30 moles %.

**4.** Agents de collage suivant les revendications 1 à 3, caractérisés en ce que le monomère vinylique est l'isobutylène, le styrène, l'α-méthylstyrène, l'alcool allylique ou l'éther d'isobutyle et de vinyle.

**5.** Agents de collage suivant les revendications 1 à 4, caractérisés en ce que le mono-alcool est le méthanol, l'éthanol, le n-propanol, l'isopropanol, l'isobutanol, le sec-butanol, le n-pentanol, l'alcool isoamylique, le n-hexanol, le n-octanol, le n-dodécanol, le cyclohexanol, le 2-éthylhexanol et notamment le n-butanol ou un mélange de ses alcools.

**6.** Agents de collage suivant les revendications 1 à 5, caractérisés en ce que l'amino-alcool est le 2-méthylaminoéthanol, le 3-amino-1-propanol, le 1-amino-2-propanol, le 4-amino-2-butanol, le 2-amino-2-méthylpropanol, la diéthanolamine et notamment le 2-aminoéthanol ou un mélange de ces alcools.

**7.** Agents de collage suivant les revendications 1 à 6, caractérisés en ce qu'ils contiennent côte à côte les motifs structuraux suivants :

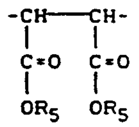
(III),

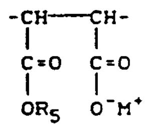
(IV)

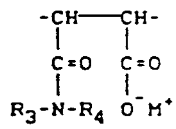
(V)

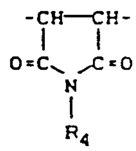
(VI)

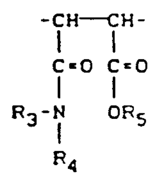
(VII)

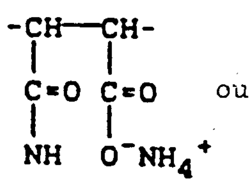 ou 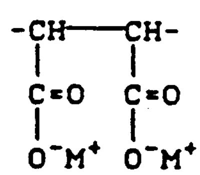 (VIII)

où

$R_5$ est un reste aliphatique ayant 1 à 12 atomes de carbone,

$M^+$ est un ion $NH_4^+$, un ion de métal alcalin ou un ion ammonium et le motif structural (VI) n'apparaît que lorsque $R_3$ représente H dans la formule (II).

**8.** Agents de collage suivant la revendication 7, caractérisés en ce que la proportion molaire des motifs (III):(IV):(V):(VI):(VII):(VIII) est égale à 1:2-10:0,01-0,02:0-0,02:0,01-0,015:2-10.

**9.** Agents de collage suivant la revendication 7, caractérisés en ce que la proportion molaire (III):(IV):(V):-(VI):(VII):(VIII) est égale à 1:2-5:0,01-0,015:0-0,015:0,01-0,012:4-6.

**10.** Agents de collage suivant les revendications 1 à 8, caractérisés en ce qu'ils contiennent de l'urée ou un dérivé d'urée.